# EUROPÄISCHE PATENTANMELDUNG

(11) **EP 1 395 026 A1**
(43) Veröffentlichungstag der Anmeldung: **03.03.2004**
(21) Anmeldenummer: 03019087.0
(22) Anmeldetag: 22.08.2003
(51) Int. Cl.: H04M 3/56, H04Q 7/38

(54) **Mobiles Endgerät für ein einen Fernsprech-Konferenzdienst anbietendes Telekommunikationsnetz**

(30) Priorität: 02.09.2002 DE 10240437
(71) Anmelder: GAP AG, 82041 Oberhaching (DE)
(72) Erfinder: Hirschburger, Friedhelm, 81379 München (DE)
(74) Vertreter: Katérle, Axel

(57) **Zusammenfassung**

Ein mobiles Endgerät für ein einen Fernsprech-Konferenzdienst anbietendes Telekommunikationsnetz ist dazu eingerichtet, in Antwort auf den Empfang mindestens einer vorbestimmten, von einem ersten Netzteilnehmer über das Telekommunikationsnetz an das Endgerät gesendeten Konferenzanforderungsnachricht einen Fernsprechruf an einen vorbestimmten zweiten Netzteilnehmer zu senden und diesen per Konferenzschaltung mit dem ersten Netzteilnehmer zu verbinden, wobei das Endgerät ein Prüfmodul enthält, das dazu eingerichtet ist, eingehende Nachrichten auf Übereinstimmung mit der vorbestimmten Konferenzanforderungsnachricht zu prüfen.

## Beschreibung

Die Erfindung betrifft ein mobiles Endgerät für ein einen Fernsprech-Konferenzdienst anbietendes Telekommunikationsnetz.

Digitale Mobilfunk-Kommunikationsnetze nach GSM- oder UMTS-Standard und zahlreiche andere moderne Telekommunikationsnetze bieten Konferenzdienste an, bei denen drei oder mehr Fernsprechteilnehmer gleichzeitig miteinander telefonieren können. Regelmäßig müssen dabei von einem der Konferenzteilnehmer alle anderen Konferenzteilnehmer angerufen und zusammengeschaltet werden. Dieser eine Konferenzteilnehmer dient somit als Konferenzleiter, dessen Funktion die eines zentralen Verbindungsknotens für die übrigen Konferenzteilnehmer ist.

Es sei nun folgende beispielhafte Situation betrachtet. Eine Großmutter hat einen Schwächeanfall, kann aber gerade noch per Telefon ihren in einer entfernten Stadt lebenden Sohn erreichen und ihn von ihrem schlechten Zustand informieren, bevor sie ohnmächtig wird. Um Hilfe zu benachrichtigen, wählt der Sohn eine offizielle Notrufnummer. Viele Staaten haben solche regelmäßig kostenlosen Notrufnummern reserviert, die Zugang zu einem sich über das ganze Land erstreckenden Netz von Rettungsleitstellen erlauben. Diese Rettungsleitstellen werden beispielsweise von Feuerwehr, Polizei oder anderen Rettungsdiensten, etwa Ambulanzdiensten, betrieben. Zahlreiche europäische Länder haben sich beispielsweise auf die Rufnummer 112 als gemeinsame Notrufnummer geeignet.

Die bisher etablierten öffentlichen Notrufsysteme basieren zumeist darauf, dass nur die Notrufnummer ohne Ortsvorwahl gewählt werden muss. Dafür wird der Anrufer stets zu seiner örtlichen Notrufzentrale durchgestellt. Wird die Notrufnummer zusammen mit einer Ortsvorwahl eingegeben, bricht das Netz den Versuch ab; der Anrufer erhält keine Verbindung. Im obigen Beispiel ist die Großmutter die Hilfebedürftige, nicht der anrufende Sohn. Da sich der Sohn in einer anderen Stadt befindet als die Großmutter, wird er in Deutschland (und auch in anderen Ländern) bei Wahl der Nummer 112 nicht zur örtlichen Notrufzentrale in der Stadt der Großmutter durchgestellt sondern zu seiner lokalen Zentrale. Versucht der Sohn, vor Eingabe der 112 die Ortsvorwahl der Stadt zu wählen, in der sich seine Großmutter befindet, in der Hoffnung, so direkt mit der örtlichen Notrufzentrale der Großmutter verbunden zu werden, so scheitert dieser Versuch; sein Ruf wird abgebrochen.

Damit der Großmutter geholfen werden kann, müsste die vom Sohn angerufene lokale Rettungsleitstelle ihrerseits eine Zentrale am Ort der Großmutter kontaktieren und sie von dem Notfall informieren. Dabei kann wertvolle Zeit verlorengehen. Außerdem besteht die Gefahr, dass wichtige Daten von der ersten Rettungsleitstelle falsch an die zweite weitergegeben werden.

Rascher und unkomplizierter könnte in dem betrachteten Beispielfall der Sohn Hilfe organisieren, wenn die Großmutter im Besitz eines erfindungsgemäßen mobilen Endgeräts für ein einen Fernsprech-Konferenzdienst anbietendes Telekommunikationsnetz wäre. Das erfindungsgemäße Endgerät ist nämlich dazu eingerichtet, in Antwort auf den Empfang mindestens einer vorbestimmten, von einem ersten Netzteilnehmer über das Telekommunikationsnetz an das Endgerät gesendeten Konferenzanforderungsnachricht einen Fernsprechruf an einen vorbestimmten zweiten Netzteilnehmer zu senden und diesen per Konferenzschaltung mit dem ersten Netzteilnehmer zu verbinden, wobei ein in dem Endgerät enthaltenes Prüfmodul dazu eingerichtet ist, eingehende Nachrichten auf Übereinstimmung mit der vorbestimmten Konferenzanforderungsnachricht zu prüfen.

In dem betrachteten Beispielfall müsste der Sohn, nachdem ihn die Großmutter von ihrem schlechten Zustand informiert hat, lediglich die vorbestimmte Konferenzanforderungsnachricht über das Telekommunikationsnetz an die Großmutter, genauer gesagt an deren Endgerät, übermitteln. Der Sohn wäre also der erste Netzteilnehmer. Das Prüfmodul im Endgerät der Großmutter würde dann die eingehende Nachricht des Sohns mit einer in einem Speicherbereich des Endgeräts abgelegten datentechnischen Repräsentation der vorbestimmten Konferenzanforderungsnachricht vergleichen. Stellte das Prüfmodul fest, dass der Sohn die richtige Nachricht, also die vorbestimmte Konferenzanforderungsnachricht, gesendet hat, so würde das Endgerät der Großmutter automatisch einen Fernsprechruf an einen vorbestimmten zweiten Netzteilnehmer senden und diesen zweiten Netzteilnehmer dann mit dem Sohn zu einem Konferenzgespräch zusammenschalten, vorausgesetzt natürlich, der Fernsprechruf an den zweiten Netzteilnehmer hat Erfolg und es kommt eine Fernsprechverbindung zwischen dem Endgerät der Großmutter und dem zweiten Netzteilnehmer zustande. Im hier betrachteten Beispielfall wäre dieser zweite Netzteilnehmer zweckmäßigerweise eine örtliche Rettungsleitstelle in der Stadt der Großmutter, in Deutschland beispielsweise eine durch die Notrufnummer 112 erreichbare Notfallzentrale. Durch die aktive Vermittlungsrolle des Endgeräts der Großmutter (die Großmutter selbst muss nicht aktiv werden) könnte der Sohn so direkt mit einer Rettungsleitstelle vor Ort Kontakt aufnehmen und könnte auf diese Weise rascher Hilfe für die Großmutter besorgen.

Die Rufnummer des zweiten Netzteilnehmers kann herstellerseitig und vom Benutzer unveränderbar in einem Festspeicherbereich des erfindungsgemäßen Endgeräts abgespeichert sein. Es soll jedoch eine Version nicht ausgeschlossen sein, bei der die Rufnummer des zweiten Netzteilnehmers umprogrammierbar ist, so dass der Erwerber oder Besitzer des Endgeräts eine gewünschte Rufnummer entweder selber einprogrammieren kann oder die Einprogrammierung seiner gewünschten Rufnummer durch eine authorisierte Stelle veranlassen kann. Es ist auch nicht ausgeschlossen, dass in dem erfindungsgemäßen Endgerät Rufnummern für mehrere verschiedene zweite Netzteilnehmer gespeichert oder speicherbar sind, die insbesondere durch verschiedene Konferenzanforderungsnachrichten adressierbar sein können.

Es ist ferner möglich, dass das Prüfmodul dazu eingerichtet ist, eine Authorisierungsprüfung vorzunehmen, bevor es nach Eingang der Konferenzanforderungsnachricht einen Fernsprechruf an den zweiten Netzteilnehmer abschickt. Für eine solche Authorisierungsprüfung können in einem Speicherbereich des Endgeräts eine oder mehrere authorisierte Rufnummern von Netzteilnehmern des Telekommunikationsnetzes gespeichert oder speicherbar sein. Nur wenn die Rufnummer des Absenders der Konferenzanforderungsnachricht eine authorisierte Nummer ist, bewirkt das Endgerät dabei die Absendung eines Fernsprechrufs an den zweiten Netzteilnehmer.

Die vorbestimmte Konferenzanforderungsnachricht kann ebenfalls herstellerseitig festgelegt und für den Benutzer unveränderbar sein. Es sind gleichwohl Ausführungsformen vorstellbar, bei denen der Benutzer selbst die Konferenzanforderungsnachricht definieren und ggf. verändern kann.

In dem betrachteten Beispielfall kann es sein, dass die Fernsprechverbindung abbricht, nachdem die Großmutter ihren Sohn von ihrer Notlage benachrichtigt hat, beispielsweise weil die Großmutter unbeabsichtigt eine Abbruchtaste drückt oder weil ihr das Telefongerät aus der Hand gleitet und auf den Boden fällt. Um nun trotzdem eine Konferenzschaltung zwischen dem Sohn und einer Rettungszentrale über das Telefon der Großmutter herstellen zu können, ist das erfindungsgemäße Endgerät in einer vorteilhaften Weiterbildung dazu eingerichtet, eingehende Nachrichten, die ohne Bestehen einer Fernsprechverbindung zwischen dem ersten Netzteilnehmer und dem Endgerät mittels eines Datendienstes des Telekommunikationsnetzes an das Endgerät übermittelt werden, auf Übereinstimmung mit der vorbestimmten Konferenzanforderungsnachricht zu prüfen und bei Empfang der Konferenzanforderungsnachricht einen Fernsprechruf sowohl an den ersten Netzteilnehmer als auch an den zweiten Netzteilnehmer zu senden.

Bei dieser Weiterbildung ist das erfindungsgemäße Endgerät in der Lage, in Antwort auf den Eingang der Konferenzanforderungsnachricht den Aufbau einer Fernsprechverbindung nicht nur zum zweiten Netzteilnehmer sondern auch zum ersten Netzteilnehmer zu initiieren. Dies erlaubt die Herstellung einer Konferenzschaltung zwischen dem ersten und dem zweiten Netzteilnehmer unter Vermittlung des erfindungsgemäßen Endgeräts selbst dann, wenn bei Übermittlung der Konferenzanforderungsnachricht keine Fernsprechverbindung zwischen dem ersten Netzteilnehmer und dem erfindungsgemäßen Endgerät besteht. Der zur Übermittlung der Konferenzanforderungsnachricht verwendete Datendienst kann beispielsweise ein der Übertragung von alphanumerischen Zeichenfolgen oder von Multimediadaten dienender Dienst des Telekommunikationsnetzes sein, etwa ein SMS- (Short Message Service) oder ein MMS- (Multimedia Messaging Service) Dienst. In dem betrachteten Beispielfall der Großmutter und ihres Sohns könnte beispielsweise als Konferenzanforderungsnachricht das Wort "HILFE" festgelegt werden. Der Sohn müsste dann lediglich eine SMS- oder MMS-Nachricht des Inhalts "HILFE" an das Endgerät der Großmutter senden, das daraufhin automatisch einen Fernsprechruf sowohl an den Sohn als auch an die örtliche Rettungszentrale im Bezirk der Großmutter absenden würde und bei erfolgreichem Aufbau beider Fernsprechverbindungen den Sohn mit der Rettungszentrale zu einem Konferenzgespräch zusammenschalten würde.

Es ist freilich auch der Fall denkbar, dass die Fernsprechverbindung zwischen Großmutter und Sohn nicht abreißt, nachdem die Großmutter ihren Sohn angerufen hat und ihm ihre schlechte Verfassung mitteilen konnte. Für einen solchen Fall ist eine Weiterbildung des erfindungsgemäßen Endgeräts vorteilhaft, bei der das Endgerät dazu eingerichtet ist, eingehende Nachrichten, die während Bestehens einer Fernsprechverbindung zwischen dem ersten Netzteilnehmer und dem Endgerät von dem ersten Netzteilnehmer an das Endgerät übermittelt werden, auf Übereinstimmung mit der vorbestimmten Konferenzanforderungsnachricht zu prüfen und eine auf den Empfang der Konferenzanforderungsnachricht hin hergestellte Fernsprechverbindung des Endgeräts mit dem zweiten Netzteilnehmer mit der bestehenden Fernsprechverbindung zwischen dem Endgerät und dem ersten Netzteilnehmer zu einer Konferenzverbindung zu verknüpfen. Diese Weiterbildung geht davon aus, dass die Konferenzanforderungsnachricht über eine bestehende Fernsprechverbindung zwischen dem ersten Netzteilnehmer und dem Endgerät an dieses übermittelt werden kann. Erkennt das Endgerät die Konferenzanforderungsnachricht, muss es lediglich noch den Aufbau einer Fernsprechverbindung zu dem zweiten Netzteilnehmer initiieren und diesen dann mit dem ersten Netzteilnehmer zu einem Konferenzgespräch zusammenschalten.

Eine Möglichkeit, um bei bestehender Fernsprechverbindung zwischen erstem Netzteilnehmer und Endgerät die Konferenzanforderungsnachricht zu übertragen, ist beispielsweise per Wählsignal. Wählsignale werden von einem Telefon bei Wahl einer Ziffer ausgesendet; sie sind für jede wählbare Ziffer verschieden und ermöglichen so die eindeutige Identifizierung des gewählten Ziffer. Die Konferenzanforderungsnachricht kann dabei in einer bestimmten Ziffernkombination bestehen, die der erste Netzteilnehmer an seinem Telefonapparat eingeben muss, um die Konferenzanforderungsnachricht zu übertragen. Bei einer Ausführungsform des erfindungsgemäßen Endgeräts ist das Prüfmodul daher dazu eingerichtet, während Bestehens der Fernsprechverbindung zwischen dem ersten Netzteilnehmer und dem Endgerät übertragene Wählsignal-Nachrichten des ersten Netzteilnehmers auf Übereinstimmung mit der vorbestimmten Konferenzanforderungsnachricht zu prüfen. Nur wenn der erste Netzteilnehmer die richtige Ziffernkombination eingegeben hat, bewirkt das erfindungsgemäße Endgerät, dass eine Konferenzschaltung zwischen dem ersten und dem zweiten Netzteilnehmer hergestellt wird. Als Wählsignal kommen bevorzugt DTMF- (Doppelton-Mehrfrequenz) Signale in Betracht, die von den meisten marktgängigen Telefongeräten unterstützt werden.

Als alternative oder zusätzliche Möglichkeit kann das Prüfmodul des erfindungsgemäßen Endgeräts dazu eingerichtet sein, über die Fernsprechverbindung zwischen dem ersten Netzteilnehmer und dem Endgerät übertragene Sprachnachrichten des ersten Netzteilnehmers auf Übereinstimmung mit der vorbestimmten Konferenzanforderungsnachricht zu prüfen. Das Prüfmodul wird hierzu einen Spracherkennungsteil umfassen, der es gestattet, Sprachmitteilungen des ersten Netzteilnehmers zu erkennen. Beispielsweise kann als vorbestimmte Konferenzanforderungsnachricht der Begriff "HILFE" festgelegt sein. Sobald das erfindungsgemäße Endgerät dieses Wort vom ersten Netzteilnehmer erkennt, setzt es automatisch alle notwendigen Prozeduren zur Herstellung einer Konferenzschaltung des ersten Netzteilnehmers mit dem zweiten Netzteilnehmer in Gang.

Bei einer bevorzugten Ausführungsform der Erfindung ist das Endgerät als von einem numerischen Wähltastenfeld freies, handtragbares Notrufgerät ausgebildet, welches mit mindestens einer Rufauslösetaste ausgeführt ist, durch deren Betätigung die Absendung eines Fernsprechrufs von dem Endgerät an einen vorbestimmten Rufempfänger bewirkbar ist. Dieser Rufempfänger ist vorzugsweise ein anderer Netzteilnehmer als der zweite Netzteilnehmer. Im betrachteten Beispielfall der Großmutter und ihres Sohns kann beispielsweise der Sohn der vorbestimmte Empfänger des bei Drücken der Rufauslösetaste abgesendeten Fernsprechrufs sein.

Insbesondere kann das erfindungsgemäße Endgerät mit einem oder mehreren Merkmalen des in der deutschen Gebrauchsmusteranmeldung Nr. 201 11 886.6 beschriebenen Personenortungsgeräts ausgeführt sein. Der Inhalt dieser Gebrauchsmusteranmeldung wird hiermit durch Verweis in die vorliegende Offenbarung einbezogen. Es sei ausdrücklich darauf hingewiesen, dass beliebige Merkmale des Personenortungsgeräts der deutschen Gebrauchsmusteranmeldung Nr. 201 11 886.6 einzeln und unabhängig voneinander bei dem erfindungsgemäßen Endgerät verwirklicht sein können.

## Patentansprüche

1. Mobiles Endgerät für ein einen Fernsprech-Konferenzdienst anbietendes Telekommunikationsnetz,
**dadurch gekennzeichnet, dass** das Endgerät dazu eingerichtet ist, in Antwort auf den Empfang mindestens einer vorbestimmten, von einem ersten Netzteilnehmer über das Telekommunikationsnetz an das Endgerät gesendeten Konferenzanforderungsnachricht einen Fernsprechruf an einen vorbestimmten zweiten Netzteilnehmer zu senden und diesen per Konferenzschaltung mit dem ersten Netzteilnehmer zu verbinden, wobei das Endgerät ein Prüfmodul enthält, das dazu eingerichtet ist, eingehende Nachrichten auf Übereinstimmung mit der vorbestimmten Konferenzanforderungsnachricht zu prüfen.

2. Mobiles Endgerät nach Anspruch 1,
**dadurch gekennzeichnet, dass** das Endgerät dazu eingerichtet ist, eingehende Nachrichten, die ohne Bestehen einer Fernsprechverbindung zwischen dem ersten Netzteilnehmer und dem Endgerät mittels eines Datendienstes des Telekommunikationsnetzes an das Endgerät übermittelt werden, auf Übereinstimmung mit der vorbestimmten Konferenzanforderungsnachricht zu prüfen und bei Empfang der Konferenzanforderungsnachricht einen Fernsprechruf sowohl an den ersten Netzteilnehmer als auch an den zweiten Netzteilnehmer zu senden.

3. Mobiles Endgerät nach Anspruch 2,
**dadurch gekennzeichnet, dass** der Datendienst ein der Übertragung von alpha-numerischen Zeichenfolgen oder von Multimediadaten dienender Dienst ist.

4. Mobiles Endgerät nach einem der Ansprüche 1 bis 3,
**dadurch gekennzeichnet, dass** das Endgerät dazu eingerichtet ist, eingehende Nachrichten, die während Bestehens einer Fernsprechverbindung zwischen dem ersten Netzteilnehmer und dem Endgerät von dem ersten Netzteilnehmer an das Endgerät übermittelt werden, auf Übereinstimmung mit der vorbestimmten Konferenzanforderungsnachricht zu prüfen und eine auf den Empfang der Konferenzanforderungsnachricht hin hergestellte Fernsprechverbindung des Endgeräts mit dem zweiten Netzteilnehmer mit der bestehenden Fernsprechverbindung zwischen dem Endgerät und dem ersten Netzteilnehmer zu einer Konferenzverbindung zu verknüpfen.

5. Mobiles Endgerät nach Anspruch 4,
**dadurch gekennzeichnet, dass** das Prüfmodul dazu eingerichtet ist, während Bestehens der Fernsprechverbindung zwischen dem ersten Netzteilnehmer und dem Endgerät übertragene Wähltonsignal-Nachrichten des ersten Netzteilnehmers auf Übereinstimmung mit der vorbestimmten Konferenzanforderungsnachricht zu prüfen.

6. Mobiles Endgerät nach Anspruch 4 oder 5,
**dadurch gekennzeichnet, dass** das Prüfmodul dazu eingerichtet ist, über die Fernsprechverbindung zwischen dem ersten Netzteilnehmer und dem Endgerät übertragene Sprachnachrichten des ersten Netzteilnehmers auf Übereinstimmung mit der vorbestimmten Konferenzanforderungsnachricht zu prüfen.

7. Mobiles Endgerät nach einem der Ansprüche 1 bis 6,
**dadurch gekennzeichnet, dass** das Endgerät dazu eingerichtet ist, als zweiten Netzteilnehmer eine unter einer offiziellen, ortsvorwahlfrei zu wählenden Notrufnummer erreichbare Notrufstelle zu rufen.

8. Mobiles Endgerät nach einem der Ansprüche 1 bis 7,
**dadurch gekennzeichnet, dass** es als von einem numerischen Wähltastenfeld freies, handtragbares Notrufgerät ausgebildet ist, welches mit mindestens einer Rufauslösetaste ausgeführt ist, durch deren Betätigung die Absendung eines Fernsprechrufs von dem Endgerät an einen vorbestimmten Rufempfänger bewirkbar ist.

9. Mobiles Endgerät nach Anspruch 8,
**dadurch gekennzeichnet, dass** der Rufempfänger ein anderer Netzteilnehmer als der zweite Netzteilnehmer ist.
